# EUROPEAN PATENT SPECIFICATION

(11) **EP 2 156 104 B1**
(45) Date of publication and mention of the grant of the patent: **07.10.2015**
(21) Application number: 08766786.1
(22) Date of filing: 09.06.2008
(51) Int. Cl.: F24F 7/10, E04B 9/02, F24F 12/00, F24F 7/00, F24F 11/00

(54) **VENTILATION SYSTEM**
BELÜFTUNGSSYSTEM
SYSTÈME DE VENTILATION

(30) Priority: 07.06.2007 EP 07109827
(43) Date of publication of application: 24.02.2010
(73) Proprietor: Nederlandse Organisatie voor toegepast- natuurwetenschappelijk onderzoek TNO, 2595 DA 's-Gravenhage (NL)
(72) Inventor: KNOLL, Bastiaan, NL-2671 DR Naaldwijk (NL); JACOBS, Peter, NL-2611 LK Delft (NL)
(74) Representative: Hatzmann, Martin
(86) International application number: PCT/NL2008/050363
(87) International publication number: WO 2009/005344

(56) References cited:
- EP-A- 0 552 690
- WO-A-00/32150
- DE-A1- 19 730 180
- DE-B- 1 253 431
- FR-A- 2 076 813
- FR-A- 2 551 117
- GB-A- 489 423
- US-A- 2 198 867
- US-A- 3 099 200
- US-A- 3 255 687
- US-A- 3 303 771
- US-A- 3 403 614
- US-A- 5 454 756
- US-B1- 6 817 941

## Description

### Field of the invention

The invention refers to a ventilation system especially for classrooms and other dwelling, living and/or working spaces, hereinafter, for the sake of simplicity - however, not to be understood in any limiting sense - indicated as classrooms or rooms.

### Background of the invention

Air conditioning of classrooms etc. is a difficult problem, because large amounts of outside air have to be let in into the classroom without causing draught. In order to provide pupils and teacher with fresh air, per classroom 150 liters/second is required. In many cases only windows can be used for ventilation. Often this will not be sufficient for draught-proof ventilation. Based on investigations it is esteemed that in 80% of the elementary school classrooms the ventilation does not meet the minimal requirements of the relevant building regulations.

The CO₂ level, which legally is allowed to be 1200 ppm, often is a multiple of this value during some parts of the day. Recent investigations have shown that this also influences the school results. At arithmetic, for instance, it appears that even at small exceedings of the CO₂ level of 1200 ppm, the results are rewarded with a report mark 6 while it would have been a 7.5 when the CO₂ level would have been about 800 ppm.

A result of the high density of pupils in a classroom is also that much heat will be generated. Due to the high heat production in the classroom the heating system only needs to start at zero degrees at sunny days. Cold air via the windows or ventilation grids will not be mixed sufficiently because de heating only starts at very low temperature, which leads to comfort complaints deep in the classroom. Another problem is that overheating may occur in summer. Conventional solutions using active cooling and heat recuperation are costly in purchase and exploitation. The estimated costs for improving the inner climate in existing primary school classrooms in the Netherlands are about half a milliard of euros. From document US-A-2198867 are known a method and a ventilation system according to the preambles of claim 1 and claim 4 respectively.

### Summary of the invention

The present invention aims to offer a solution for the problems indicated in the foregoing. To that end the invention preferably provides a method for ventilating rooms, especially classrooms (1) and similar rooms, comprising:
- providing a surface structure parallel to a wall, ceiling or floor of a room (3);
- providing forced air inlet (5) from the outside air (6) into the room (2) between said surface structure (3) and said wall, ceiling or floor;
- providing air outlet openings (7), mainly evenly spaced over the whole surface of said surface structure,
wherein the ratio between the pitch and the diameter of said outlet openings is between 6 and 20:1, preferably between 10 and 16:1, more preferably around 13:1.

A further embodiment concerns a method for ventilating classrooms and similar rooms, comprising next steps:
- providing a lowered ceiling;
- providing forced air inlet from the outside air into the room above the lowered ceiling;
- providing air outlet openings which are mainly evenly spaced over the whole surface of the lowered ceiling.

By the proposed method the whole ceiling surface is used to supply air to the classroom instead of blowing air concentratedly ("cold spots") via windows or grids in the façade or the ceiling. Via a pattern of air outlet openings in the (lowered) ceiling the air is blown into the room. By induction the air blown in will be mixed with the room air and thus the possible temperature difference will be equalized before the air comes into the living zone (height of about < 1.80 m).

According to the invention, the lowered ceiling is used as a distribution element having a maximum distribution surface which is incomparably much larger than the surface of the inflow opening(s) via which the outside air is let in (also much larger than when - according to the prior art - supplied via open windows or ceiling grids). Because the distribution surface is much larger, no draught will occur.

Due to the larger surface the outside air can better be mixed by induction with the inside air and thus preheating of the air will be unnecessary. By doing so overheating will be prevented. The system has a relative low flow resistance, which is favourable for the energy consumption. For the air distribution use may be made of existing components, which often are already present in classrooms, thus reducing the costs.

Using a perforated lowered ceiling for air supply is not obvious, because such a ceiling normally only is used for air exhaust.

Preferably, the hydraulic diameter of the outlet openings will lie approximately between 0,1 and 6 cm (e.g. circular openings having a diameter of 2.5 cm = about 5 cm²) and the pitch of the outlet openings between 1 and 180 cm (e.g. 30 cm). Preferably, the inflow speed lies between 1 and 4 m/s, depending on the remaining parameters, e.g. 2 m/s.

Preferably, the means for forced air inlet from the outside air into the room above the lowered ceiling are formed by an electrical ventilator.

During low outside temperatures the energy consumption for heating may be reduced by - optionally - providing a (more or less heat conducting) heat recovery (HR) plate between an air supply channel and an air exhaust channel, thus enabling the exhaust air to warm up the supply air. Because such an HR plate preferably extends over the whole or a substantial part of the surface of the classroom, a very large heat exchange surface will be available. By doing so the pressure drop of this HR construction and possible extra noise production caused by the ventilator can be minimized compared with prior art HR apparatus.

By means of a more or less isolating separation plate, indicated hereinafter as isolation plate, it can be achieved that the supply air can be blown via the underside of the (e.g. concrete) floor of the above storey (or the roof). A relatively high air speed will increase heat exchange with the concrete mass. By doing so it is possible to cool (during warm weather) this concrete floor at night. By day this cold can be used then to cool the supply air. In winter the isolation in this isolation plate, but certainly also the stationary air in the (small) room between the isolation plate and the ceiling, provides an isolating layer. By this it can be prevented that heat will be withdrawn from the ceiling, which possibly would lead to complaints (cold feet) at the higher floor.

The large surface is also advantageous for the standing time and pressure drop of a filter possibly provided. Due to this the energy consumption remains low and it is possible to achieve a long filter standing time. This offers the possibility to replace filters during "major repairs".

By means of, e.g., a distribution valve or slide it can be adjusted whether the supply air will be transferred to the outlet room via the first or via the second channel.

The method according to the invention has the advantage that the components which are required for the method have more or less the shape of a lowered ceiling, i.e. are shaped of plates and may be installed in classrooms already in use by means of parts which are often used for installing lowered ceilings etc., e.g. hanging staves or wires.

The invention also provides for a ventilation system for ventilating rooms like classrooms (1) and the like, comprising a surface structure (3) mainly extending parallel to a wall, ceiling (4) or floor of that room (1), and means (5) for forced air inlet from the outside air (6) into the room (2) between said surface structure and said wall, ceiling (4) or floor, and air outlet openings (7) mainly evenly spaced over the whole surface of the surface structure (3), wherein the ratio between the pitch and the diameter of said outlet openings is between 6 and 20:1, preferably between 10 and 16:1, more preferably around 13:1.

Below, the various aspects will be further elucidated using an exemplary embodiment of the invention.

### Exemplary embodiment of the invention

- Figure 1: schematically shows a first, simple exemplary embodiment of the invention, without HR plate;
- Figure 2: schematically shows a second, more extended exemplary embodiment of the invention, including an HR plate and an isolation plate.

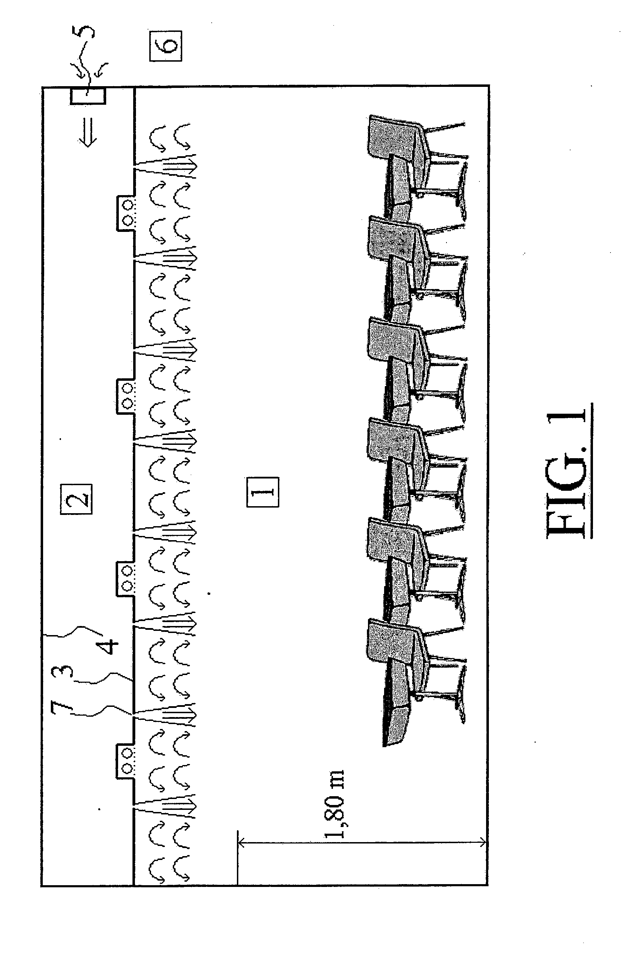

Figure 1 shows a classroom 1 provided with a ventilation system using the room 2 between a lowered ceiling 3 and a ceiling 4. A ventilator 5 provides forced air inflow from the outside air 6 into the room 2 above the lowered ceiling. The fresh outside air sucked inward is mainly distributed to the classroom over the whole surface of the lowered ceiling 3, via air outlet openings 7 which are made evenly spaced in the lowered ceiling 3, as a result of which the whole surface of the lowered ceiling 3 will be used to supply fresh air to the classroom 1. The arrows in the figure indicate that the air blown in via the openings 7 will be mixed up by induction with the air already present in the classroom 1, causing that the possible temperature difference between blown in air and the air already present in the classroom 1 will be equalized before the air enters the living zone (below the height of about 1.80 m). Besides, the air let in from the outside will additionally be warmed-up with heat originating from the classroom by the lowered ceiling, and from other construction parts like e.g. the roof, causing that the air given off by the outlet openings will be less cold than the air let in from the outside. In summer the ventilation system may be used to cool down the construction above the lowered ceiling during the night. By doing so it is possible to blow in fresh air by day at a lower temperature than the outside temperature.

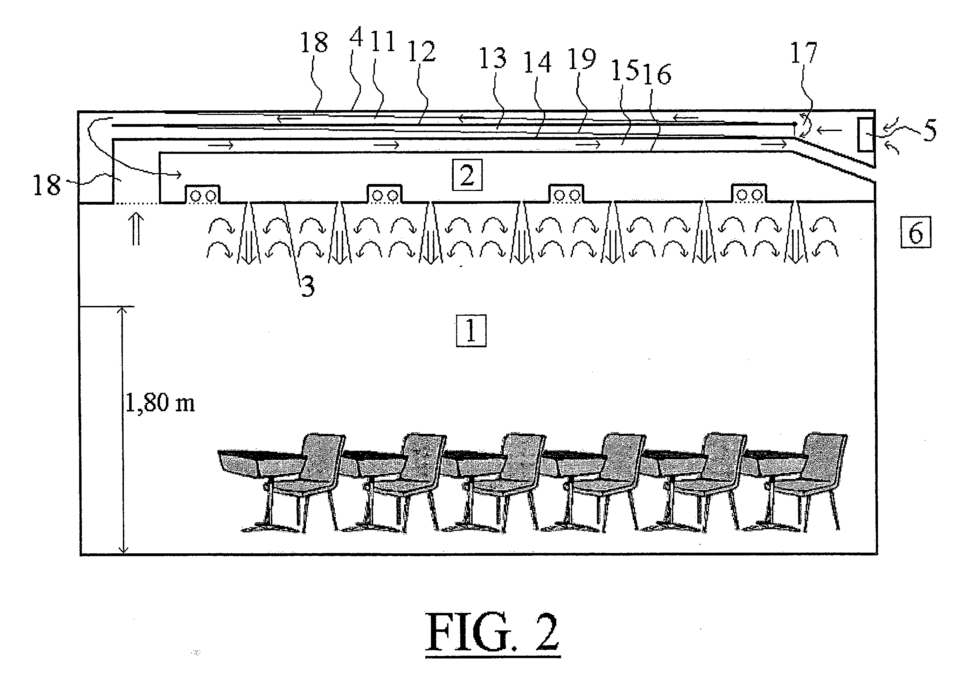

Besides, heat may be recovered from the exhaust air, which option will be treated in the discussion of figure 2.

Using outlet openings of 2.5 cm diameter, a pitch of about 30 cm and an inflow speed of 2 m/s favourable results have already been achieved.

In an embodiment the pitch between the openings (7) is such that induction air, i.e. the room air rising towards the ceiling, will rise between the air blowing out of the openings (7), such that advantageous mixing may be achieved. The openings (7) preferably have such small surface areas and/or diameters that the travelling distance of the blown air is such that no or hardly any draft is felt by people in the room, or at least by most people in the room. For example, the travelling distance may be relatively short. Furthermore, it has been found that for optimal room ventilation that has above advantages, there may be a relation between the pitch between the openings (7) and the surface area of the openings (7). In particular, the ratio between said pitch and said surface area is between 6 and 20:1, preferably between 10 and 16:1, more preferably around 13:1. In this way, an advantage mixture of air in the room (1) and air from outside can be achieved so that draft, or a sense of draft, is prevented.

By providing the openings (7) with a relatively small diameter the draft and/or the blown air will not be sensed at a relatively small distance from the ceiling (3), i.e. the penetration depth of the blown air will be relatively small. From investigation it has been found that at a penetration depth of thirty times the diameter of the opening (7) the speed of the blown air has decreased to 10% of the inflow speed.

In an exemplary embodiment, the openings (7) have a diameter of approximately 23 millimetres, wherein at a penetrating depth of the blown air of 700 millimetre from the opening (7), an original inflow speed of 2 meters per second can be decreased to approximately 0,2 meters per second. Smaller openings (7) could also be applied, wherein the penetration of the blown air has a smaller depth. For example, openings (7) having a diameter of 10 millimetres, and having a pitch of approximately 130 millimetres could be applied. In this case, the penetration depth could be approximately 300 millimetres.

In this description, the diameter of the opening (7) is to be understood as the distance between two opposite points on the edge of the opening (7). The openings (7) may for example have a circular or square shaped cross section but could also have any other shape, for example slot-shaped.

Instead of a lowered ceiling (3) parallel to the ceiling (4), the invention could also comprise another surface structure that is parallel to the wall or floor of the room 1. In this case, the same advantages can be achieved. Instead of a class room, the room could in principle be any room.

### In an embodiment

The main components shown in figures 1 and 2 have more or less the shape of plates and may be installed by means of constructions which are commonly used for lowered ceilings in new or existing classrooms, e.g. hanging staves or wires.

Figure 2 shows how inside the room between the lowered ceiling 3 and the roof or the upper storey floor 4 an additional number of flat layers may be installed, e.g. by means of, like for the lowered ceiling 3, hanging wires or staves (not shown).

Top-down there are visible a first supply channel 11, a plate 12, a second supply channel 13, a plate 14, an exhaust channel 15 and a plate 16. Via the plates 14 and 16 heat may be exchanged and those may thus be indicated as HR plates. Preferably, plate 12 has heat isolating properties. A valve or slide 17 can open and close the entries of the first and second supply channel. Exhaust channel 15 is connected with the classroom 1 via one or more connection channels 18. Those connection channels 18 are narrower than the plates 12, 14 and 16 (which is not visible well in the figure).

At low outside temperature the energy consumption for heating may be reduced by warming-up the supply air by the exhaust air, viz. by - different from figure 2 - setting the valve 17 so that the supply air is sent to the room 2 via channel 13. In that case heat exchange will occur via the plate 14 between the supply channel 13 and the exhaust channel 15. Because this plate 14 extends over the whole surface of the classroom, the heat exchanging surface is very large.

By sending the supply air via the upper supply channel - by setting the valve 17 in the position drawn in figure 2 - it will be achieved that the supply air is blown directly under the floor of the above storey or the roof 4. A relatively high air speed will increase the heat exchange with the concrete mass. By doing so it is possible to cool this concrete floor at night. By day this cold may be used to cool the supply air. Anyway, the valve 17 also may be put into various intermediate positions, thus enabling that - the openings of both air supply channels 11 and 13 are freely accessible then - the outside air can be supplied to the room 1 to be ventilated via both air supply channels, the lowered ceiling 3 and the air outlet openings 7. In that way the extent of heat recovery can be adjusted. The valve 17 may set manually and/or by control means, e.g. an electronic processor and a servomotor (both not shown).

The large surface is advantageous too for the standing time and the pressure drop of any filter 18 in channel 11 and any filter 19 in channel 13. Because of this the energy consumption will remain low and it will be possible to achieve long filter standing times. This offers the possibility to perform filter replacement during "major repairs". As can be seen, the filters 18 and 19 can extend - placed askew - over almost the whole surface of the relevant plates 12 and 14 respectively.

## Claims

1. Method for ventilating rooms, especially classrooms (1) and similar rooms, comprising:
- providing a surface structure parallel to a wall, ceiling or floor of a room (3);
- providing forced air inlet (5) from the outside air (6) into the room (2) between said surface structure (3) and said wall, ceiling or floor;
- providing air outlet openings (7), evenly spaced over the whole surface of said surface structure, the method being **characterized in that** the ratio between the pitch and the diameter of said outlet openings is between 6 and 20:1.

2. Method according to claim 1, wherein the ratio between the pitch and the diameter of said outlet openings is between 10 and 16:1, preferably around 13:1.

3. Method according to claim 1 or 2 for ventilating classrooms (1) and similar rooms, comprising:
- providing a lowered ceiling (3);
- providing forced air inlet (5) from the outside air (6) into the room (2) above the lowered ceiling;
- providing air outlet openings (7), mainly evenly spaced over the whole surface of the lowered ceiling.

4. Ventilation system for ventilating rooms like classrooms (1) and the like, comprising a surface structure (3) extending parallel to a wall, ceiling (4) or floor of that room (1), and means (5) for forced air inlet from the outside air (6) into the room (2) between said surface structure and said wall, ceiling (4) or floor, and air outlet openings (7) evenly spaced over the whole surface of the surface structure (3), the ventilation system being **characterized in that** the ratio between the pitch and the diameter of said outlet openings is between 6 and 20:1.

5. Ventilation system according to claim 4, wherein the ratio between the pitch and the diameter of said outlet openings is between 10 and 16:1, preferably around 13:1.

6. Ventilation system according to claim 4 or 5, wherein the surface structure comprises a lowered ceiling (3) parallel to the ceiling (4).

7. Ventilation system according to any of claims 4 - 6, wherein the hydraulic diameter of the outlet openings is between 0,1 and 6 cm.

8. Ventilation system according to any of claims 4 - 7, wherein the means for forced air inlet from the outside air into the room between the surface structure and said wall, ceiling (4) or floor are formed by an electrical ventilator (5) .

9. Ventilation system according to any of claims 4 - 8 comprising a first air supply channel (11), formed by the room between, at one side, the ceiling (4) and, at the other side, an isolation plate (12) extending mainly parallel to the ceiling, which first air supply channel (11) can form a connection between said means (5) for forced air inlet and the air outlet openings (7) in the lowered ceiling.

10. Ventilation system according to any of claims 4 - 9, comprising a second air supply channel (13), formed by the room between, at one side, the isolation plate (12) and, at the other side, an HR plate (14) extending mainly parallel to the ceiling, between that second air supply channel (13) and an air exhaust channel (16) also extending mainly parallel to the ceiling, which forms, via connection means (18) connected to the room (1) to be ventilated, a connection between the room to be ventilated and the outside air, which second air supply channel (11) can also form a connection between said means (5) for forced air inlet and the air outlet openings (7) in the lowered ceiling.

11. Ventilation system according to claim 10, comprising means (17) for supplying at choice, either manually or by control means, the outside air via the first air supply channel (11) and/or the second air supply channel (13) .

12. Ventilation system according to claim 10 or 11, provided with a filter (18, 19) in the first and/or the second air supply channel (11, 13).

13. Ventilation system according to claim 12, wherein the filter (18, 19) extends over a substantial part of the length of the relevant air supply channel (11, 13) and either is, at the entry side of that air supply channel, attached to the upside of the air supply channel and, at the exit side of the air supply channel, attached to the underside of the air supply channel, or is, at the entry side of that air supply channel, attached to the underside of the air supply channel and, at the exit side of the air supply channel, attached to the upside of the air supply channel.

## Patentansprüche

1. Verfahren zur Belüftung von Räumen, besonders von Klassenräumen (1) und ähnlichen Räumen, umfassend:
- die Bereitstellung einer Oberflächenstruktur parallel zu einer Wand, einer Decke oder einem Boden eines Raumes (3);
- die Bereitstellung eines Zwangslufteinlasses (5) von der Außenluft (6) in den Raum (2) zwischen der Oberflächenstruktur (3) und der Wand, der Decke oder dem Boden;
- die Bereitstellung von Luftauslassöffnungen (7), angeordnet in gleichmäßigem Abstand über die gesamte Oberfläche der Oberflächenstruktur, wobei das Verfahren **dadurch gekennzeichnet ist, dass** das Verhältnis zwischen dem Abstand und dem Durchmesser der Auslassöffnungen zwischen 6 und 20:1 ist.

2. Verfahren nach Anspruch 1, wobei das Verhältnis zwischen dem Abstand und dem Durchmesser der Auslassöffnungen zwischen 10 und 16:1, bevorzugt ungefähr 13:1, ist.

3. Verfahren nach Anspruch 1 oder 2 zur Belüftung von Klassenräumen (1) und ähnlichen Räumen, umfassend:
- die Bereitstellung einer abgesenkten Decke (3);
- die Bereitstellung eines Zwangslufteinlasses (5) von der Außenluft (6) in den Raum (2) über der abgesenkten Decke;
- die Bereitstellung von Luftauslassöffnungen (7), hauptsächlich angeordnet in einem gleichmäßigen Abstand über die gesamte Oberfläche der abgesenkten Decke.

4. Belüftungssystem zur Belüftung von Räumen wie Klassenräumen (1) und dergleichen, umfassend eine Oberflächenstruktur (3), die parallel zu einer Wand, Decke (4) oder einem Boden dieses Raumes (1) verläuft, und Mitteln (5) für Zwangslufteinlass von der Außenluft (6) in den Raum (2) zwischen der Oberflächenstruktur und der Wand, Decke (4) oder dem Boden, und Luftauslassöffnungen (7), angeordnet in einem gleichmäßigen Abstand über die gesamte Oberfläche der Oberflächenstruktur (3), wobei das Belüftungssystem **dadurch gekennzeichnet ist, dass** das Verhältnis zwischen dem Abstand und dem Durchmesser der Auslassöffnungen zwischen 6 und 20:1 ist.

5. Belüftungssystem nach Anspruch 4, wobei das Verhältnis zwischen dem Abstand und dem Durchmesser der Auslassöffnungen zwischen 10 und 16:1, bevorzugt ungefähr 13:1, ist.

6. Belüftungssystem nach Anspruch 4 oder 5, wobei die Oberflächenstruktur eine abgesenkte Decke (3) parallel zu der Decke (4) umfasst.

7. Belüftungssystem nach einem der Ansprüche 4 - 6, wobei der Hydraulikdurchmesser der Auslassöffnungen zwischen 0,1 und 6 cm ist.

8. Belüftungssystem nach einem der Ansprüche 4 - 7, wobei die Mittel für Zwangslufteinlass von der Außenluft in den Raum zwischen der Oberflächenstruktur und der Wand, Decke (4) oder dem Boden durch einen elektrischen Lüfter (5) gebildet sind.

9. Belüftungssystem nach einem der Ansprüche 4 - 8, umfassend einen ersten Luftzufuhrkanal (11), gebildet durch den Raum zwischen, auf einer Seite, der Decke (4) und, auf der anderen Seite, einer Isolierplatte (12), die im Wesentlichen parallel zu der Decke verläuft, wobei der erste Luftzufuhrkanal (11) eine Verbindung zwischen den Mitteln (5) für Zwangslufteinlass und den Luftauslassöffnungen (7) in der abgesenkten Decke bilden kann.

10. Belüftungssystem nach einem der Ansprüche 4 - 9, umfassend einen zweiten Luftzufuhrkanal (13), gebildet durch den Raum zwischen, auf einer Seite, der Isolierplatte (12) und, auf der anderen Seite, einer warmgewalzten Platte, einer HR-Platte (14), die im Wesentlichen parallel zu der Decke verläuft, zwischen diesem zweiten Luftzufuhrkanal (13) und einem Luftabzugskanal (16), der ebenfalls im Wesentlichen parallel zu der Decke verläuft, der über Verbindungsmittel (18) verbunden mit dem zu belüftenden Raum (1), eine Verbindung zwischen dem zu belüftenden Raum und der Außenluft bildet, wobei der zweite Luftzufuhrkanal (11) ebenfalls eine Verbindung zwischen den Mitteln (5) für Zwangslufteinlass und den Luftauslassöffnungen (7) in der abgesenkten Decke bilden kann.

11. Belüftungssystem nach Anspruch 10, umfassend Mittel (17), um nach Wahl entweder manuell oder durch Steuermittel die Außenluft über den ersten Luftzufuhrkanal (11) und/oder den zweiten Luftzufuhrkanal (13) zuzuführen.

12. Belüftungssystem nach Anspruch 10 oder 11, versehen mit einem Filter (18, 19) in dem ersten und/oder dem zweiten Luftzufuhrkanal (11, 13).

13. Belüftungssystem nach Anspruch 12, wobei der Filter (18, 19) über einen wesentlichen Teil der Länge des entsprechenden Luftzufuhrkanals (11, 13) verläuft und entweder an der Eingangsseite dieses Luftzufuhrkanals an der Oberseite des Luftzufuhrkanals befestigt ist und an der Ausgangsseite des Luftzufuhrkanals an der Unterseite des Luftzufuhrkanals befestigt ist, oder an der Eingangsseite dieses Luftzufuhrkanals an der Unterseite des Luftzufuhrkanals befestigt ist und an der Ausgangsseite des Luftzufuhrkanals an der Oberseite des Luftzufuhrkanals befestigt ist.

## Revendications

1. Procédé pour ventiler des salles, en particulier des salles de classe (1) et des salles similaires, consistant à :
- agencer une structure de surface parallèle à une paroi, un plafond ou un plancher d'une salle (3) ;
- agencer une entrée d'air pulsé (5) depuis l'air extérieur (6) jusque dans la salle (2) entre la structure de surface (3) et la paroi, le plafond ou le plancher ;
- agencer des ouvertures de sortie d'air (7), espacées de manière régulière sur toute la surface de la structure de surface, le procédé étant **caractérisé en ce que** le rapport entre le pas et le diamètre des ouvertures de sortie est situé entre 6 et 20:1.

2. Procédé selon la revendication 1, dans lequel le rapport entre le pas et le diamètre des ouvertures de sortie est entre 10 et 16:1, de préférence d'environ 13:1.

3. Procédé selon les revendications 1 ou 2 pour ventiler des salles de classe (1) et des salles similaires, consistant à :
- agencer un plafond abaissé (3) ;
- agencer une entrée d'air pulsé (5) depuis l'air extérieur (6) dans la salle (2) au-dessus du plafond abaissé ;
- agencer des ouvertures de sortie d'air (7), principalement espacées de manière régulière sur toute la surface du plafond abaissé.

4. Système de ventilation pour ventiler des salles telles que des salles de classe (1) et analogues, comprenant une structure de surface (3) s'étendant parallèlement à une paroi, un plafond (4) ou un plancher de cette salle (1), et des moyens (5) d'entrée d'air pulsé depuis l'air extérieur (6) dans la salle (2) entre la structure de surface et la paroi, le plafond (4) ou le plancher, et des ouvertures de sortie d'air (7) espacées de manière régulière sur toute la surface de la structure de surface (3), le système de ventilation étant **caractérisé en ce que** le rapport entre le pas et le diamètre des ouvertures de sortie est situé entre 6 et 20:1.

5. Système de ventilation selon la revendication 4, dans lequel le rapport entre le pas et le diamètre des ouvertures de sortie est entre 10 et 16:1, de préférence d'environ 13:1.

6. Système de ventilation selon les revendications 4 ou 5, dans lequel la structure de surface constitue un plafond abaissé (3) parallèle au plafond (4).

7. Système de ventilation selon l'une quelconque des revendications 4 à 6, dans lequel le diamètre hydraulique des ouvertures de sortie est entre 0,1 et 6 cm.

8. Système de ventilation selon l'une quelconque des revendications 4 à 7, dans lequel les moyens d'entrée d'air pulsé depuis l'air extérieur dans la salle entre la structure de surface et la paroi, le plafond (4) ou le plancher sont formés par un ventilateur électrique (5).

9. Système de ventilation selon l'une quelconque des revendications 4 à 8, comprenant un premier canal d'alimentation d'air (11), formé par la salle entre, d'un côté, le plafond (4) et, de l'autre côté, d'une plaque d'isolation (12) s'étendant principalement parallèlement au plafond, lequel premier canal d'alimentation d'air (11) peut former une liaison entre les moyens (5) d'entrée d'air pulsé et les ouvertures de sortie d'air (7) du plafond abaissé.

10. Système de ventilation selon l'une quelconque des revendications 4 à 9, comprenant un second canal d'alimentation d'air (13) formé par la salle entre, d'un côté, la plaque d'isolation (12) et, de l'autre côté, une plaque haute résilience HR (14) s'étendant principalement parallèlement au plafond, entre ce second canal d'alimentation d'air (13) et un canal de sortie d'air (16) s'étendant également principalement parallèlement au plafond, qui forme, par l'intermédiaire de moyens de liaison (18) reliés à la salle (1) à ventiler, une liaison entre la salle à ventiler et l'air extérieur, lequel second canal d'alimentation d'air (13) peut également former une liaison entre les moyens (5) d'entrée d'air pulsé et les ouvertures de sortie d'air (7) du plafond abaissé.

11. Système de ventilation selon la revendication 10, comprenant des moyens (17) pour alimenter au choix, manuellement ou par des moyens de commande, de l'air extérieur par l'intermédiaire du premier canal d'alimentation d'air (11) et/ou du second canal d'alimentation d'air (13).

12. Système de ventilation selon les revendications 10 ou 11, muni d'un filtre (18, 19) dans le premier et/ou le second canal d'alimentation d'air (11, 13).

13. Système de ventilation selon la revendication 12, dans lequel le filtre (18, 19) s'étend sur une partie importante de la longueur du canal d'alimentation d'air concerné (11, 13) et soit, au niveau du côté entrée de ce canal d'alimentation d'air, est fixé sur le côté supérieur du canal d'alimentation d'air et, au niveau du côté sortie du canal d'alimentation d'air, est fixé sur le côté inférieur du canal d'alimentation d'air, soit, au niveau du côté entrée de ce canal d'alimentation d'air, est fixé sur le côté inférieur du canal d'alimentation d'air et, au niveau du côté sortie du canal d'alimentation d'air, est fixé sur le côté supérieur du canal d'alimentation d'air.
